# EUROPEAN PATENT APPLICATION

(11) **EP 4 481 999 A1**
(43) Date of publication of application: **25.12.2024**
(21) Application number: 23756049.5
(22) Date of filing: 13.01.2023
(51) Int. Cl.: H02K 9/19, H02K 3/24, H02K 19/02

(54) **COOLING STRUCTURE IN ROTATING ELECTRIC MACHINE**

(30) Priority: 15.02.2022 JP 2022021405
(71) Applicant: Kabushiki Kaisha Toshiba, Tokyo 105-0023 (JP); Toshiba Energy Systems & Solutions Corporation, Saiwai-ku Kawasaki-shi Kanagawa 2120013 (JP)
(72) Inventor: YOKOYAMA, Akiyuki, Tokyo 105-0023 (JP); NAKAYAMA, Tadahiro, Tokyo 105-0023 (JP)
(74) Representative: Hoffmann Eitle
(86) International application number: PCT/JP2023/000769
(87) International publication number: WO 2023/157521

(57) **Abstract**

In an embodiment, a cooling structure in a rotating electric machine includes a coil winding and a flow tube. A conductor wire bundle formed by bundling the conductor wires is formed in the coil winding. The coil winding rotates a rotor using a rotating magnetic field generated by application of a voltage to the conductor wires or induces a voltage in the conductor wires by a rotating magnetic field generated by rotation of the rotor. Cooling fluid flows inside the flow tube, and the flow tube is arranged on an outer surface of the conductor wire bundle.

## Description

### FIELD

Embodiments of this invention described herein relate generally to a cooling structure in a rotating electric machine.

### BACKGROUND

In electric motors, a rotating magnetic field is generated by applying a voltage (AC voltage) to a coil winding of a stator. In addition, a rotor is rotated by the generated rotating magnetic field, or an electromotive force is induced on the rotor by a rotating magnetic field, and the rotor is rotated by the induced electromotive force. In addition, in generators, a voltage (electromotive force) is induced on a coil winding of a stator by a rotating magnetic field generated by rotation of the rotor. In rotating electric machines, such as electric motors and generators, an increase in temperature in the coil winding is suppressed by cooling the coil winding. An example of a cooling structure cooling the coil winding in rotating electric machines is a cooling structure in which flow tubes are disposed in the vicinity of coil conductors forming the coil winding and cooling fluid is caused to flow inside the flow tubes.

In a cooling structure cooling the coil winding with cooling fluid flowing through the flow tubes as described above, a plurality of conductor wires forming the coil winding and the flow tubes through which the cooling fluid flows are mutually assembled. In the assembling, it is required to properly secure work efficiency in mutual assembling of the conductor wires and the flow tubes.

### CITATION LIST

### PATENT LITERATURE

Patent Literature 1: Japanese Patent Application KOKAI Publication No. 2021-48154
Patent Literature 2: Japanese Patent Application KOKAI Publication No. S58-218845

### SUMMARY

### TECHNICAL PROBLEM

A problem to be solved by the present invention is to provide a cooling structure in a rotating electric machine properly securing work efficiency in mutual assembling of a plurality of conductor wires forming a coil winding and flow tubes through which a cooling fluid flows.

### SOLUTION TO PROBLEM

According to an embodiment, a cooling structure in a rotating electric machine includes a coil winding and a flow tube. The coil winding includes a plurality of conductor wires and a conductor wire bundle formed by bundling the conductor wires is formed in the coil winding. The coil winding rotates a rotor using a rotating magnetic field generated by application of a voltage to the conductor wires or induces a voltage in the conductor wires by a rotating magnetic field generated by rotation of the rotor. Cooling fluid flows inside the flow tube, and the flow tube is arranged on an outer surface of the conductor wire bundle.

### BRIEF DESCRIPTION OF THE DRAWINGS

FIG. 1 is a perspective view schematically illustrating a structure of an electric motor according to a first embodiment.
FIG. 2 is a sectional view schematically illustrating the structure of the electric motor according to the first embodiment in a section parallel or substantially parallel to an axial direction of the electric motor.
FIG. 3 is a schematic diagram illustrating a structure of part of a coil winding and a vicinity thereof in the electric motor according to the first embodiment.
FIG. 4 is a schematic diagram schematically illustrating a structure of one of coil side portions formed in the coil winding and a vicinity thereof, and illustrating a covering member in a section orthogonal or substantially orthogonal to a circumferential direction (direction around a rotation axis) of the electric motor, in the electric motor according to the first embodiment.
FIG. 5 is a cross-sectional view schematically illustrating a cross section taken along line B1-B1 of FIG. 4.
FIG. 6 is a cross-sectional view schematically illustrating a structure of one of coil side portions formed in a coil winding and a vicinity thereof in a cross section orthogonal or substantially orthogonal to an extending direction of a conductor wire bundle, in an electric motor according to a first modification.
FIG. 7 is a cross-sectional view schematically illustrating a structure of one of coil side portions formed in a coil winding and a vicinity thereof in a cross section orthogonal or substantially orthogonal to an extending direction of a conductor wire bundle, in an electric motor according to a second modification.

### DETAILED DESCRIPTION

Embodiments will now be described with reference to drawings.

### (First Embodiment)

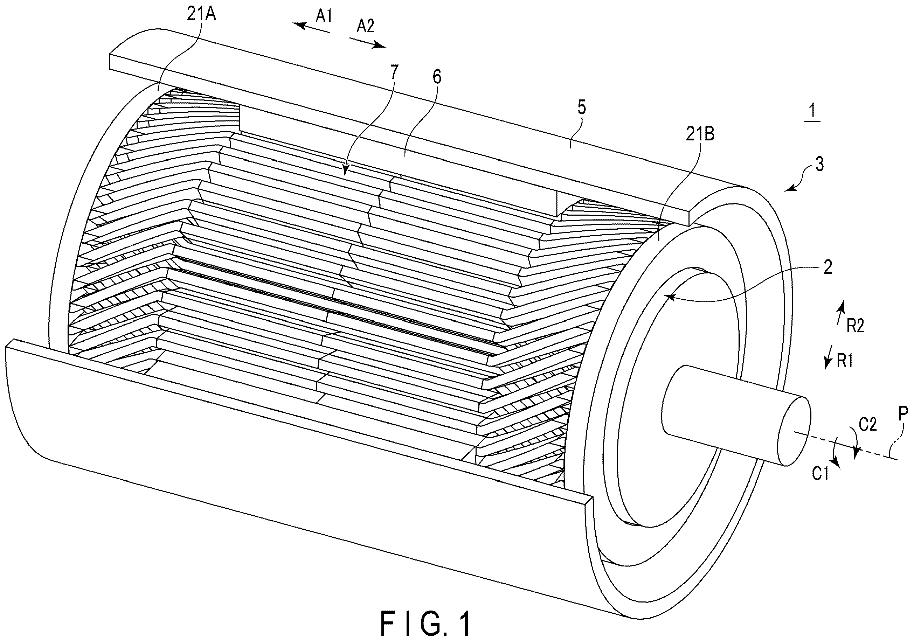

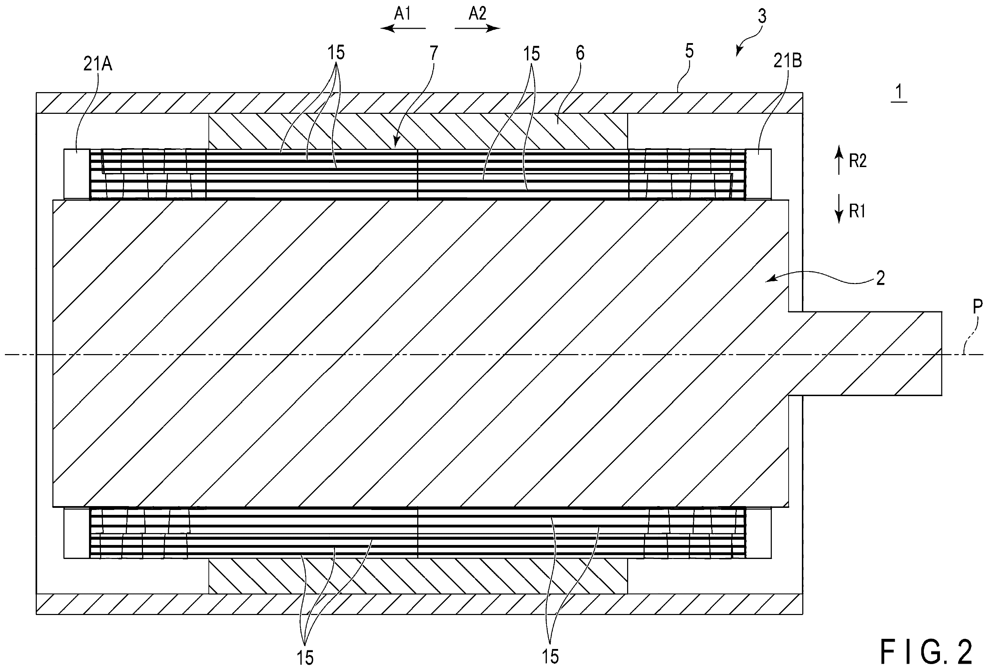

First, a first embodiment will be explained as an example of an embodiment. The first embodiment illustrates an electric motor 1 as an example of a rotating electric machine. FIG. 1 and FIG. 2 illustrate a structure of the electric motor 1 according to the first embodiment. The electric motor 1 is, for example, an induction motor. As illustrated in FIG. 1 and FIG. 2, the electric motor 1 includes a rotor 2 and a stator 3. The rotor 2 is rotatable with respect to the stator 3 with a rotation axis P serving as a center. In the electric motor 1, a direction along the rotation axis P is defined as an axial direction (direction indicated with an arrow A1 and an arrow A2). In addition, in the electric motor 1, a direction around the rotation axis P is defined as a circumferential direction (direction indicated with an arrow C1 and an arrow C2). In addition, in the electric motor 1, a direction intersecting (orthogonal or substantially orthogonal to) both the axial direction and the circumferential direction is defined as a radial direction (arrow R1 and arrow R2). In the electric motor 1, a side close to the rotation axis P in the radial direction serves as an inner peripheral side, and a side distant from the rotation axis P in the radial direction serves as an outer peripheral side. FIG. 1 illustrates a perspective view omitting part of the stator 3, and FIG. 2 schematically illustrates a section parallel or substantially parallel to the axial direction of the electric motor 1.

The stator 3 surrounds the rotor 2 from the outer peripheral side of the electric motor 1 over the whole circumference in the circumferential direction of the electric motor 1. The stator 3 includes a frame 5, an iron core 6, and a coil winding 7. The frame 5 holds the iron core 6 and the coil winding 7. In addition, the frame 5 is coupled with the rotor 2 in a state of being rotatable around the rotation axis P. The rotor 2 is coupled to the frame 5 via a bearing (not illustrated) or the like. In the electric motor 1, the iron core 6 and the coil winding 7 are arranged between the rotor 2 and the frame 5 in the radial direction. The frame 5 surrounds the iron core 6 and the coil winding 7 from the outer peripheral side of the electric motor 1 over the whole circumference in the circumferential direction of the electric motor 1. In addition, in the electric motor 1 in the example of FIG. 1 and FIG. 2, the iron core 6 is disposed on the outer peripheral side of the coil winding 7 in the radial direction, and is disposed between the coil winding 7 and the frame 5 in the radial direction. The iron core 6 surrounds the coil winding 7 from the outer peripheral side of the electric motor 1 over the whole circumference in the circumferential direction of the electric motor 1.

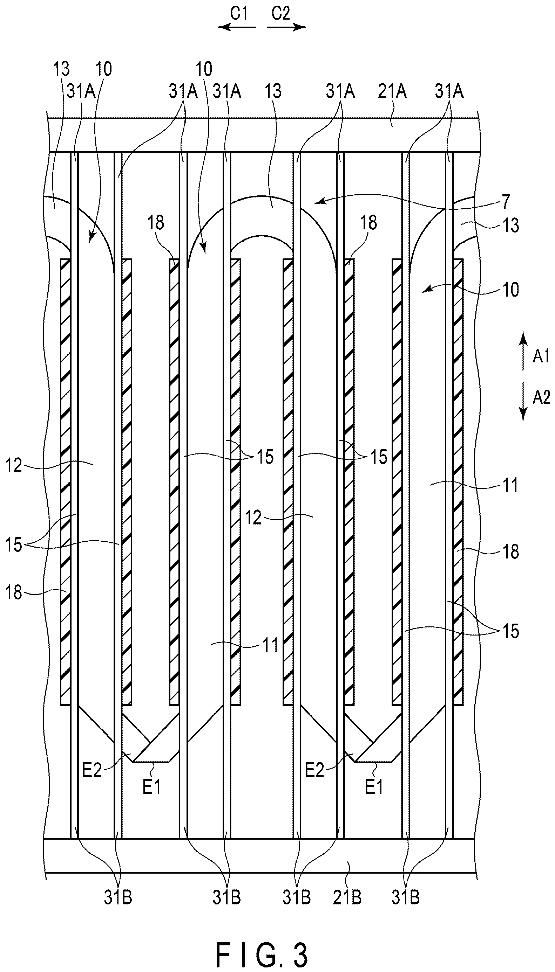

The coil winding 7 is formed of coil conductors 10 (see FIG. 3 and the like) having conductivity and described below, and a voltage is applicable to the coil winding 7. In the electric motor 1, a magnetic field is generated by application of a voltage (AC voltage) to the coil winding 7. By generation of a magnetic field by the coil winding 7, eddy current is generated on the rotor 2, and a driving force rotating the rotor 2 is generated. By chronologically changing the magnetic field generated by the coil winding 7 by application of an AC voltage to the coil winding 7 or the like, the magnetic field generated by the coil winding 7 is chronologically changed. In this manner, the eddy current generated on the rotor 2 chronologically changes, and the rotor 2 is rotated around the rotation axis P. In an example, three-phase AC power having different phases from each other is supplied to the electric motor 1. In this case, three coil windings 7 of a U phase, a V phase, and a W phase are provided, and AC voltages having mutually different phases are applied to the three coil windings 7. Accordingly, in the present embodiment, the rotor 2 is rotated by rotating a magnetic field generated by application of the voltage to the coil conductors 10 of the coil winding 7.

In an example, a rotating magnetic field is generated as described above by application of a voltage to the coil conductors 10 of the coil winding 7. In addition, an electromotive force is induced on the rotor 2 by the generated rotating magnetic field, and the rotor 2 is rotated by the induced electromotive force. Accordingly, the electric motor 1 may have any structure of rotating the rotor 2 using the rotating magnetic field generated by application of a voltage to the coil conductors 10 of the coil winding 7 in the stator 3.

The iron core 6 is formed of a magnetic substance, such as an electromagnetic steel sheet. In a state in which a magnetic field is generated by application of a voltage to the coil winding 7, the iron core 6 is magnetized by the magnetic field generated by the coil winding 7. In this manner, a magnetic field generated by the magnetized iron core 6 is added to the magnetic field generated by the coil winding 7. This enhances the intensity of the magnetic field generated in the electric motor 1.

FIG. 3 illustrates a structure of part of the coil winding 7 and a vicinity thereof. In the present embodiment, as illustrated in FIG. 3 and the like, the coil winding 7 is formed by connecting a plurality of (many) coil conductors 10. Each of the coil conductors 10 includes extended ends E1 and E2. In each of the coil conductors 10, one end is formed of the extended end E1, and an end opposite to the extended end E1 is formed of the extended end E2. Each of the coil conductors 10 includes a pair of coil side portions 11 and 12. In each of the coil conductors 10, a folded portion 13 is formed between the coil side portions 11 and 12. In each of the coil conductors 10, the coil side portion 11 is extended from the extended end E1 to the folded portion 13, and the coil side portion 12 is extended from the folded portion 13 to the extended end E2. In addition, in each of the coil conductors 10, at the folded portion 13, the coil side portion 12 is folded with respect to the coil side portion 11. In the coil winding 7, between two adjacent coil conductors 10, the extended end E1 of one of the coil conductors 10 is connected to the extended end E2 of the other of the coil conductors 10.

By forming the coil winding 7 as described above, in the coil winding 7 according to the present embodiment, each of the coil conductors 10 forms a corresponding one of loop portions of the coil winding 7. In addition, in the coil winding 7, a connection body of a plurality of coil conductors 10 is extended in a helical manner, with the central axis of the coil winding 7 serving as the center. In the electric motor 1 according to the present embodiment, in each of the coil conductors 10, each of the coil side portions 11 and 12 are extended along the axial direction (rotation axis P) of the electric motor 1. For this reason, in each of the coil conductors 10, the folded portion 13 forms an end of one side thereof in the axial direction of the electric motor 1. In addition, in each of the coil conductors 10, any one or more of the extended ends E1 and E2 forms an end on a side opposite to the folded portion 13 in the axial direction of the electric motor 1. Further, in the electric motor 1 according to the present embodiment, the central axis of the coil winding 7 is extended along the circumferential direction (direction around the rotation axis P) of the electric motor 1. In the coil winding 7, a connection body of a plurality of coil conductors 10 is extended in a helical manner, with the central axis along the circumferential direction of the electric motor 1 serving as the center.

In each of the coil conductors 10 forming the coil winding 7, one or more flow tubes 15 are provided on each of the coil side portions 11 and 12. In each of the coil conductors 10, one or more flow tubes 15 are arranged in an adjacent manner. In the present embodiment, in each of the coil conductors 10, a plurality of flow tubes 15 are provided on each of the coil side portions 11 and 12. Each of the flow tubes 15 is a pipe formed of metal, such as stainless steel, and a channel through which cooling fluid flows is formed inside each of the flow tubes 15. Examples of the cooling fluid flowing through each of the flow tubes 15 include cooling oil and cooling water and the like.

In each of the coil conductors 10, each of the coil side portions 11 and 12 includes an outer surface (outer peripheral surface), and flow tubes 15 are disposed on the outer surface (outer peripheral surface) of each of the coil side portions 11 and 12. On the outer surface of each of the coil side portions 11, one or more flow tubes 15 are extended along the extending direction of the coil side portion 11 between the extended end E1 and the folded portion 13. In addition, on the outer surface of each of the coil side portions 12, one or more flow tubes 15 are extended along the extending direction of the coil side portion 12 between the extended end E2 and the folded portion 13. Accordingly, on the outer surface of each of the coil side portions 11 and 12, one or more flow tubes 15 are extended along the axial direction (rotation axis P) of the electric motor 1.

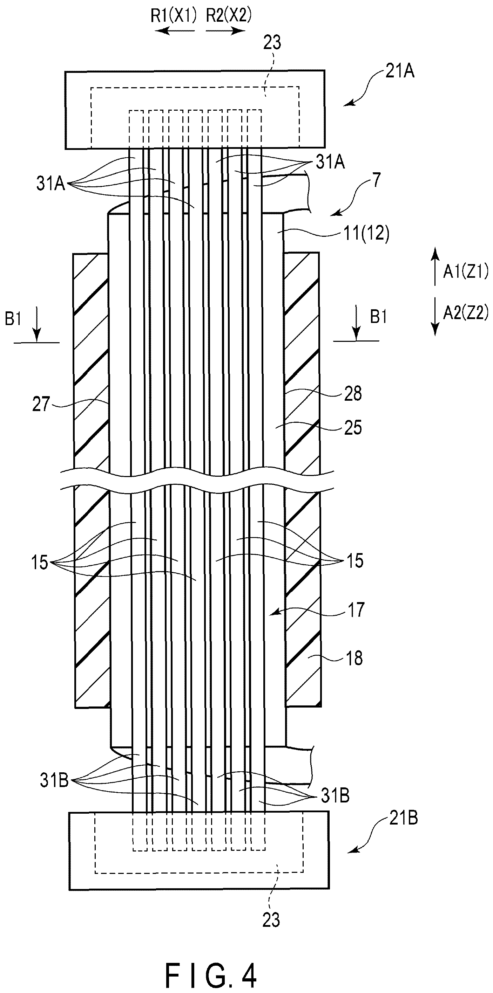

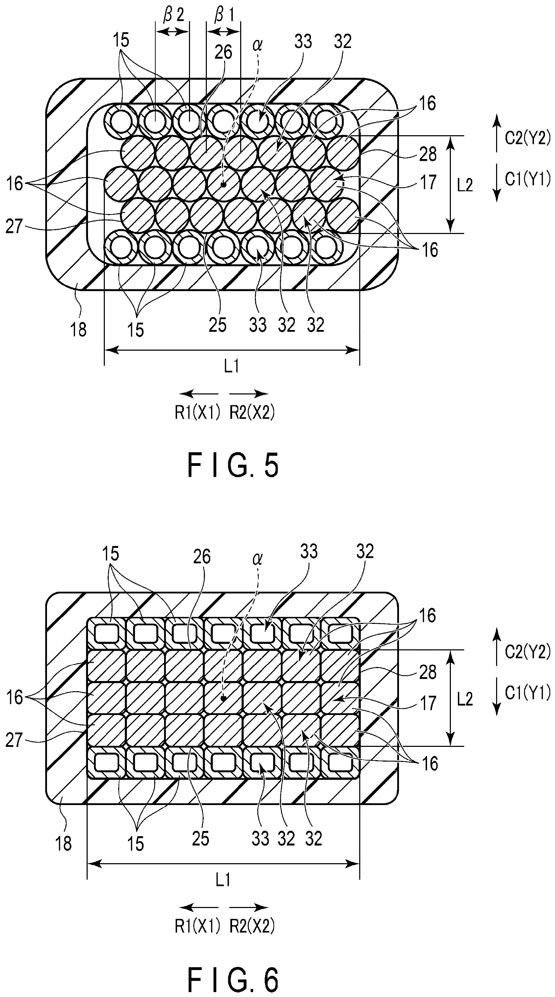

FIG. 4 illustrates a structure of one of the coil side portions 11 and 12 formed in the coil winding 7 and a vicinity thereof. FIG. 4 illustrates the coil side portion (11 or 12) as viewed from one side of the circumferential direction (direction around the rotation axis P) of the electric motor 1, and illustrates a covering member 18 described below in a section orthogonal or substantially orthogonal to the circumferential direction (direction around the rotation axis) of the electric motor 1. In addition, FIG. 5 illustrates a cross section taken along line B1-B1 in FIG. 4. FIG. 5 illustrates a cross section orthogonal or substantially orthogonal to the extending direction of the coil side portion (11 or 12), and a cross section orthogonal or substantially orthogonal to the axial direction of the electric motor 1. Although FIG. 4 and FIG. 5 illustrate a structure of one of the coil side portions 11 and 12 and a vicinity thereof, each of the other coil side portions 11 and 12 and a vicinity thereof also have a structure similar to those of FIG. 4 and FIG. 5.

As illustrated in FIG. 1 to FIG. 4, the stator 3 of the electric motor 1 is provided with one or more vessels (first vessel) 21A and one or more vessels (second vessel) 21B. In an example, the stator 3 is provided with one vessel 21A and one vessel 21B. In another example, the electric motor 1 is provided with a plurality of vessels 21A and a plurality of vessels 21B. In this case, the vessels 21A are arranged in a line along at least one of the circumferential direction (direction around the rotation axis P) of the electric motor 1 and the radial direction of the electric motor 1, and the vessels 21B are arranged in a line along at least one of the circumferential direction of the electric motor 1 and the radial direction of the electric motor 1. In the present embodiment, the vessel (first vessel) 21A is disposed distantly from the coil winding 7 toward one side of the axial direction of the electric motor 1. The vessel (second vessel) 21B is disposed distantly from the coil winding 7 toward a side opposite to the side on which the vessel 21A is positioned in the axial direction of the electric motor 1. Each of the vessels 21A and 21B has non-conductivity (electric insulation). The vessels 21A and 21B are preferably formed of a non-magnetic substance. In an example, each of the vessels 21A and 21B is formed of PPS (polyphenylene sulfide) resin.

Each of the flow tubes 15 provided on the coil winding 7 as described above includes projecting portions 31A and 31B projecting from the coil winding 7 and the covering member 18. In each of the flow tubes 15, the projecting portion (first projecting portion) 31A projects from the coil winding 7 toward a side on which the vessel (first vessel) 21A is positioned in the axial direction of the electric motor 1, and the projecting portion (second projecting portion) 31B projects from the coil winding 7 toward a side on which the vessel (second vessel) 21B is positioned in the axial direction of the electric motor 1. For this reason, in each of the flow tubes 15, the projecting portions 31A and 31B project from the coil winding 7 to mutually opposite sides in the axial direction of the electric motor 1. In each of the flow tubes 15, the projecting portion 31A projects from the coil winding 7 toward a corresponding one of the one or more vessels 21A, and is connected to the corresponding one of the one or more vessels 21A. In addition, in each of the flow tubes 15, the projecting portion 31B projects from the coil winding 7 toward a corresponding one of the one or more vessels 21B, and is connected to the corresponding one of the one or more vessels 21B.

An inner cavity 23 is formed inside each of the vessels 21A and 21B. In each of the flow tubes 15, the projecting portion (first projecting portion) 31A is inserted into an inner cavity 23 of the corresponding one of the one or more vessels 21A. In addition, in each of the flow tubes 15, the projecting portion (second projecting portion) 31B is inserted into an inner cavity 23 of the corresponding one of the one or more vessels 21B.

In an example, a cooling fluid is supplied to the inner cavity 23 of each of one or more vessels 21A with a pump (not illustrated) or the like. In addition, in each of the flow tubes 15, the cooling fluid flows into the channel from the inner cavity 23 of the connected one of the one or more vessels 21A. Thereafter, in the channel of each of the flow tubes 15, the cooling fluid flows from the connected one of the one or more vessels 21A toward the connected one of the one or more vessels 21B. Thereafter, in each of the flow tubes 15, the cooling fluid having flowed through the channel is discharged into the inner cavity 23 of the connected one of the one or more vessels 21B. The cooling fluid is thereafter discharged from the inner cavity 23 of each of one or more vessels 21B, and the cooling fluid is supplied to the inner cavity 23 of each of one or more vessels 21A again by a pump or the like.

As described above, by causing the cooling fluid to flow through the channel of each of the flow tubes 15, the coil winding 7 is cooled in the electric motor 1. This structure properly suppresses an increase in temperature of the coil winding 7 and the like. In addition, because the cooling fluid flows as described above, the cooling fluid can flow from one vessel 21A into respective channels of the flow tubes 15. In addition, the cooling fluid can be discharged from the channels of the flow tubes 15 into one vessel 21B. In an example, in each of the flow tubes 15, the cooling fluid flows into the channel from the inner cavity 23 of the connected one of the one or more vessels 21B. In this case, in each of the flow tubes 15, the cooling fluid is discharged from the channel into the inner cavity 23 of the connected one of the one or more vessels 21A.

As illustrated in FIG. 5 and the like, the coil winding 7 includes a plurality of conductor wires 16, and a conductor wire bundle 17 formed by bundling the conductor wires 16 is formed in the coil winding 7. Each of the conductor wires 16 is a metal wire formed of conductive metal, such as a copper wire, or an insulation coated wire formed by coating the outer peripheral of the metal wire with an insulating film. In the present embodiment, in each of the coil conductors 10 of the coil winding 7, the conductor wire bundle 17 is extended from the extended end E1 to the extended end E2 through the coil side portion 11, the folded portion 13, and the coil side portion 12 in this order. In addition, in the coil winding 7, the conductor wire bundle 17 has an extending axis α, and is extended along the extending axis α serving as the center. In the conductor wire bundle 17, a side close to the extending axis α serves as an inner peripheral side, and a side distant from the extending axis α serves as an outer peripheral side. The conductor wire bundle 17 includes an outer surface (outer peripheral surface) forming the outermost peripheral in the conductor wire bundle 17. In the present embodiment, an outer surface (outer peripheral surface) of each of the coil side portions 11 and 12 of the coil winding 7 is formed of the outer surface (outer peripheral surface) of the conductor wire bundle 17. In addition, in each of the coil side portions 11 and 12, one or more flow tubes 15 are arranged on the outer surface (outer peripheral surface) of the conductor wire bundle 17.

In addition, as illustrated in FIG. 3 to FIG. 5, in the present embodiment, in each of the coil side portions 11 and 12 of the coil winding 7, the covering member 18 covers the conductor wire bundle 17 and the flow tubes 15 arranged on the outer surface of the conductor wire bundle 17 from the outer peripheral side of the conductor wire bundle 17. The covering member 18 has non-conductivity (electric insulation) and is, for example, a tube formed of resin having non-conductivity. In each of the coil side portions 11 and 12, the covering member 18 covers the conductor wire bundle 17 and the flow tubes 15 arranged on the outer surface of the conductor wire bundle 17 over the whole circumference in the direction around the extending axis α (circumferential direction of the conductor wire bundle 17).

In addition, in each of the coil side portions 11 and 12 serving as regions on which the flow tubes 15 are arranged in the coil winding 7, an extending direction (direction indicated with an arrow Z1 and an arrow Z2) of the conductor wire bundle 17 is defined as a direction along the extending axis α. In addition, in each of the coil side portions 11 and 12, a first direction (direction indicated with an arrow Xl and an arrow X2) intersecting (orthogonal or substantially orthogonal to) the extending direction of the conductor wire bundle 17 and a second direction (direction indicated with an arrow Y1 and an arrow Y2) intersecting (orthogonal or substantially orthogonal to) both the extending direction of the conductor wire bundle 17 and the first direction are defined. In the present embodiment, in each of the coil side portions 11 and 12, the extending direction of the conductor wire bundle 17 agrees or substantially agrees with the axial direction of the electric motor 1. In addition, the first direction agrees or substantially agrees with the radial direction of the electric motor 1, and the second direction agrees or substantially agrees with the circumferential direction of the electric motor 1.

FIG. 4 illustrates the coil side portion (11 or 12) as viewed from one side of the second direction, and FIG. 5 illustrates a cross section orthogonal or substantially orthogonal to the extending direction of the conductor wire bundle 17. In addition, in each of the coil side portions 11 and 12, one or more flow tubes 15 are extended on the outer surface (outer peripheral surface) of the conductor wire bundle 17 along the extending direction of the conductor wire bundle 17.

In each of the coil side portions 11 and 12 of the coil winding 7, a dimension L1 of the coil winding 7 along the first direction is larger than a dimension L2 of the coil winding 7 along the second direction. Specifically, in the cross section of each of the coil side portions 11 and 12 orthogonal or substantially orthogonal to the extending direction of the conductor wire bundle 17, a dimension L1 along the first direction is larger than a dimension L2 along the second direction.

In the present embodiment, in each of the coil side portions 11 and 12, a pair of principal surfaces 25 and 26 and a pair of edge portions 27 and 28 are formed on the outer surface (outer peripheral surface) of the conductor wire bundle 17. In each of the coil side portions 11 and 12, each of the edge portions 27 and 28 is extended between a pair of the principal surfaces 25 and 26 along the second direction. In addition, in a region forming each of the coil side portions 11 and 12 in the conductor wire bundle 17, each of the principal surfaces 25 and 26 is extended along the first direction between a pair of the edge portions 27 and 28.

In each of the coil side portions 11 and 12, the principal surface (first principal surface) 25 faces one side of the second direction, and the principal surface (second principal surface) 26 faces a side opposite to the principal surface 25 in the second direction. For this reason, in each of the coil side portions 11 and 12, the principal surface 25 faces one side of the circumferential direction of the electric motor 1, and the principal surface 26 faces a side opposite to the principal surface 25 in the circumferential direction of the electric motor 1. In addition, in a region forming each of the coil side portions 11 and 12 in the conductor wire bundle 17, the principal surface 25 forms an end of one side of the second direction, and the principal surface 26 forms an end of a side opposite to the principal surface 25 in the second direction.

In each of the coil side portions 11 and 12, the edge portion (first edge portion) 27 faces one side of the first direction, and the edge portion (second edge portion) 28 faces a side opposite to the edge portion 27 in the first direction. In addition, in a region forming each of the coil side portions 11 and 12 in the conductor wire bundle 17, the edge portion 27 forms an end of one side of the first direction, and the edge portion 28 forms a side opposite to the edge portion 27 in the first direction. In the present embodiment, in each of the coil side portions 11 and 12, the edge portion 27 faces one side of the radial direction of the electric motor 1, and the edge portion 28 faces a side opposite to the edge portion 27 in the radial direction of the electric motor 1.

In addition, in each of the coil side portions 11 and 12, the edge portion 27 faces the inner peripheral side of the electric motor 1, and faces a side on which the rotor 2 is positioned. In each of the coil side portions 11 and 12, the edge portion 28 faces an outer peripheral side of the electric motor 1, and faces a side opposite to the side on which the rotor 2 is positioned. For this reason, in a region forming each of the coil side portions 11 and 12 in the conductor wire bundle 17, the edge portion 27 forms an edge on the side the rotor 2 is positioned, and the edge portion 28 forms an edge on the side opposite to the side on which the rotor 2 is positioned.

In each of the coil side portions 11 and 12, conductor wire lines 32 in each of which a plurality of conductor wires 16 are arranged are formed in the conductor wire bundle 17. In the example illustrated in FIG. 5 and the like, three conductor wire lines 32 are formed in the conductor wire bundle 17 in each of the coil side portions 11 and 12, and seven conductor wires 16 are arranged in each of the conductor wire lines 32. In each of the conductor wire lines 32, the conductor wires 16 are arranged in a line along the first direction. For this reason, in each of the coil side portions 11 and 12 of the coil winding 7, the arrangement direction of the conductor wires 16 in each of the conductor wire lines 32 agrees or substantially agrees with the first direction, and intersects (orthogonal or substantially orthogonal to) the extending direction of the conductor wire bundle 17.

In addition, in each of the coil side portions 11 and 12, one or more flow tubes 15 are arranged on each of the pair of principal surfaces 25 and 26 on the outer surface of the conductor wire bundle 17. In addition, in each of the coil side portions 11 and 12, a flow tube line 33 in which a plurality of flow tubes 15 are arranged is formed on each of the pair of principal surfaces 25 and 26. In the example illustrated in FIG. 5 and the like, in each of the coil side portions 11 and 12, a flow tube line 33 is formed on each of the principal surfaces 25 and 26, and seven flow tubes 15 are arranged in each of the flow tube lines 33. In each of the coil side portions 11 and 12, a plurality of flow tubes 15 are arranged in line along the first direction in each of the flow tube lines 33. For this reason, in each of the coil side portions 11 and 12, the arrangement direction of the flow tubes 15 in each of the flow tube lines 33 agrees or substantially agrees with the first direction, and agrees or substantially agrees with the arrangement direction of the conductor wires 16 in each of the conductor wire lines 32.

Herein, a pitch (first pitch) β1 and a pitch (second pitch) β2 are defined. The pitch β1 is a pitch between conductor wires 16 mutually adjacent in the arrangement direction (the first direction in each of the coil side portions 11 and 12) in each of the conductor wire lines 32, and the pitch β2 is a pitch between the flow tubes 15 mutually adjacent in the arrangement direction in each of the flow tube lines 33. The pitch β2 has a size of 80% or more to 120% or less as large as a size of the pitch β1. Accordingly, a difference (absolute value of the difference) between the pitch β1 and the pitch β2 falls within 20% of the pitch β1.

In addition, for each of the conductor wires 16, a cross-sectional shape of a portion surrounded by the outer peripheral thereof in the cross section orthogonal or substantially orthogonal to the extending direction (extending direction of the conductor wire bundle 17) is defined as a cross-sectional shape (first cross-sectional shape) γ1. In the same manner, for each of the flow tubes 15, a cross-sectional shape of a portion surrounded by the outer peripheral thereof in the cross section orthogonal or substantially orthogonal to the extending direction (extending direction of the conductor wire bundle 17 in each of the coil side portions 11 and 12) is defined as a cross-sectional shape (second cross-sectional shape) γ2. The cross-sectional shapes γ1 of the conductor wires 16 are mutually congruent or substantially congruent. In addition, the cross-sectional shapes γ2 of the flow tubes 15 are mutually congruent or substantially congruent.

In an example, the cross-sectional shape γ2 of each of the flow tubes 15 is congruent or substantially congruent with the cross-sectional shape γ1 of each of the conductor wires 16. In another example, the cross-sectional shape γ2 of each of the flow tubes 15 is similar or substantially similar to the cross-sectional shape γ1 of each of the conductor wires 16. In this case, the cross-sectional area of the cross-sectional shape γ2 of each of the flow tubes 15 is 80% or more to 120% or less as large as the cross-sectional area of the cross-sectional shape γ1 of each of the conductor wires 16. Accordingly, a difference (absolute value of the difference) between the cross-sectional area of the cross-sectional shape γ1 and the cross-sectional area of the cross-sectional shape γ2 falls within 20% of the cross-sectional area the cross-sectional shape γ1.

In the example of FIG. 5 and the like, each of the cross-sectional shapes γ1 and γ2 has a circular or substantially circular shape. In addition, each of the pair of principal surfaces 25 and 26 in the conductor wire bundle 17 is formed of a corresponding one of the conductor wire lines 32. In the example of FIG. 5 and the like, in each of the coil side portions 11 and 12, each of the principal surfaces 25 and 26 of the conductor wire bundle 17 is formed in an uneven shape in which projecting portions and recessed portions are alternately arranged along the first direction. In each of the uneven shapes of the principal surfaces 25 and 26, the projecting portions project outward (toward the outer peripheral side) in the second direction, and the recessed portions are recessed inward (toward the inner peripheral side) in the second direction. In addition, in each of the principal surfaces 25 and 26 of the conductor wire bundle 17, each of the recessed portions of the uneven shape is formed of a portion between the conductor wires 16 mutually adjacent in the arrangement direction in the corresponding conductor wire line 32. In each of the coil side portions 11 and 12, a corresponding one of the flow tubes 15 is disposed on each of the recessed portions in the above-described uneven shape formed in each of the principal surfaces 25 and 26.

In the present embodiment, the conductor wire bundle 17 formed by bundling a plurality of conductor wires 16 is formed in the coil winding 7. In addition, the flow tubes 15 are arranged on the outer surface (outer peripheral surface) of the conductor wire bundle 17. This structure enables easier setting of the flow tubes 15 on the coil winding 7 in comparison with the case in which the flow tubes 15 are arranged inside the conductor wire bundle 17. Specifically, the conductor wires 16 and the flow tubes 15 can be mutually assembled more easily in comparison with the case in which the flow tubes 15 are arranged inside the conductor wire bundle 17 and the like. This structure properly secures work efficiency in setting of the flow tubes 15 on the coil winding 7, that is, work efficiency in mutual assembling of the conductor wires 16 and the flow tubes 15.

In addition, in each of the coil side portions 11 and 12 on which the flow tubes 15 are arranged, the dimension L1 of the coil winding 7 along the first direction is larger than the dimension L2 of the coil winding 7 along the second direction. Further, in a portion forming each of the coil side portions 11 and 12 in the conductor wire bundle 17, a plurality of flow tubes 15 are arranged in line along the first direction. This structure enables effective cooling of the coil winding 7 including the coil side portions 11 and 12 by the cooling fluid flowing through the respective channels of the flow tubes 15.

In addition, in each of the coil side portions 11 and 12, a pair of principal surfaces 25 and 26 are formed on the outer surface of the conductor wire bundle 17, and the principal surfaces 25 and 26 face mutually opposite sides in the second direction. In addition, in each of the coil side portions 11 and 12, the flow tubes 15 are arranged on each of the principal surfaces 25 and 26. This structure improves the cooling performance for the coil winding 7 by the cooling fluid flowing through the respective channels of the flow tubes 15.

In addition, in each of the coil side portions 11 and 12, a plurality of conductor wires 16 are arranged in line along the first direction (arrangement direction) in each of the conductor wire lines 32 of the conductor wire bundle 17. In each of the coil side portions 11 and 12, a plurality of flow tubes 15 forming the flow tube lines 33 are arranged in line along the first direction (arrangement direction) on the outer surface of the conductor wire bundle 17. The pitch β2 between the flow tubes 15 mutually adjacent in the arrangement direction has a size of 80% or more to 120% or less as large as a size of the pitch β1 between the conductor wires 16 mutually adjacent in the arrangement direction. This structure enables, in each of the coil side portions 11 and 12, proper arrangement of the flow tubes 15 on the respective recessed portions in the above uneven shape formed on the outer surface of the conductor wire bundle 17 along the first direction (arrangement direction of the conductor wires 16). In addition, in the present embodiment, because the pitch β2 is set to a size of 80% or more as large as the size of pitch β1, the pitch β2 between the adjacent flow tubes 15 is prevented from being too small. This structure prevents an increase in the thickness of each of the flow tubes 15, and prevents a decrease in the flow rate of the cooling fluid in each of the flow tubes 15.

In portions of the uneven shape formed on the outer surface of the conductor wire bundle 17, the flow tubes 15 are arranged on the respective recessed portions. This structure increases the range of contact of the flow tubes 15 arranged on the recessed portions with the conductor wire bundle 17 (coil winding 7). An increase in the range of contact of one or more flow tubes 15 with the conductor wire bundle 17 improves the cooling performance for the coil winding 7 by the cooling fluid flowing through the respective channels of the flow tube 15.

### (Modifications)

The embodiment described above illustrates that the cross-sectional shape γ1 of each of the conductor wires 16 and the cross-sectional shape γ2 of each of the flow tubes 15 are circular or substantially circular shapes, but the structure is not limited thereto. A first modification illustrated in FIG. 6 illustrates that the cross-sectional shape γ1 of each of the conductor wires 16 and the cross-sectional shape γ2 of each of the flow tubes 15 are rectangular or substantially rectangular shape. Also in the present modification, in each of the coil side portions 11 and 12 of the coil winding 7, the flow tubes 15 are arranged on the outer surface (outer peripheral surface) of the conductor wire bundle 17. For this reason, the present modification also properly secures the work efficiency in mutual assembling of the conductor wires 16 and the flow tubes 15, in the same manner as the embodiment described above and the like.

In addition, also in the present modification, in each of the coil side portions 11 and 12, the dimension L1 of the coil winding 7 along the first direction is larger than the dimension L2 of the coil winding 7 along the second direction. In each of the coil side portions 11 and 12, a plurality of flow tubes 15 are arranged in line along the first direction on the outer surface of the conductor wire bundle 17. Further, in each of the coil side portions 11 and 12, the flow tubes 15 are arranged on each of the pair of principal surfaces 25 and 26. With this structure, the present modification also improves the cooling performance for the coil winding 7 by the cooling fluid flowing through the respective channels of the flow tubes 15, in the same manner as the embodiment described above and the like.

In the embodiment described above and the like, no flow tubes 15 are arranged on a pair of edge portions 27 and 28 in the outer surface of the conductor wire bundle 17. However, in a modification, flow tubes 15 may be arranged on one of the pair of edge portions 27 and 28 in the outer surface of the conductor wire bundle 17. Also in this case, because the flow tubes 15 are arranged on the outer surface of the conductor wire bundle 17, the work efficiency is secured in mutual assembling of the conductor wires 16 and the flow tubes 15, in the same manner as the embodiment described above and the like.

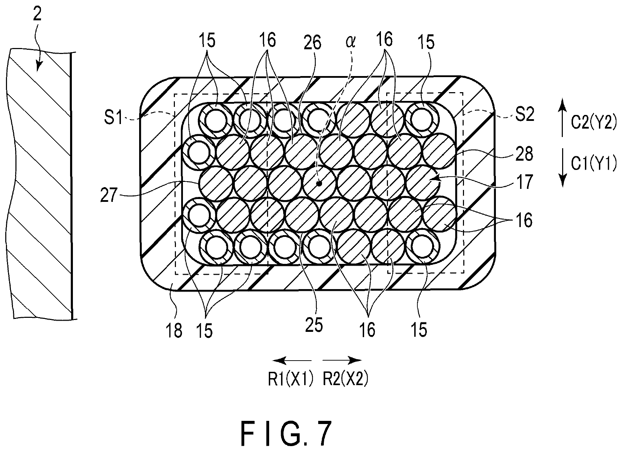

Also in the second modification illustrated in FIG. 7, in each of the coil side portions 11 and 12 of the coil winding 7, the flow tubes 15 are arranged on the outer surface (outer peripheral surface) of the conductor wire bundle 17. However, in each of the coil side portions 11 and 12, a number density of the flow tubes 15 arranged on the outer surface of the conductor wire bundle 17 is higher in a region S1 including the edge portion (first edge portion) 27 and the vicinity thereof than that in a region S2 including the edge portion (second edge portion) 28 and the vicinity thereof. Accordingly, in each of the coil side portions 11 and 12, the flow tubes 15 are arranged more densely on the outer surface in the end portion on the side (inner peripheral side of the electric motor 1) on which the rotor 2 is positioned, in comparison with the end portion on the side (outer peripheral side of the electric motor 1) opposite to the side on which the rotor 2 is positioned.

In the coil winding 7 including the coil side portions 11 and 12, a region closer to the rotor 2 is more influenced by heat caused by the eddy current generated on the rotor 2 described above, and tends to incur an increase in temperature. In each of the coil side portions 11 and 12 according to the present modification, the number density of the flow tubes 15 is higher in the end portion, such as the region S1, on the side on which the rotor 2 is positioned, as described above. With this structure, the flow tubes 15 are properly arranged in a region in which the temperature in the coil winding 7 easily increases, in correspondence with the temperature distribution in the coil winding 7 (coil side portions 11 and 12) in a state in which the rotor 2 is rotating. This structure enables proper cooling of the region in which the temperature easily increases in the coil winding 7 in a state in which the rotor 2 is rotating and the like.

In addition, also in the present modification, the flow tubes 15 are arranged on the outer surface of the conductor wire bundle 17, in the same manner as the embodiment described above. This structure enables easy and proper arrangement of the flow tubes 15 in the proper region corresponding to the temperature distribution in the coil winding 7, such as a region in which the temperature easily increases in the coil winding 7, in setting of the flow tubes 15 on the coil winding 7.

In addition, the central axis of the coil winding 7 extends along the circumferential direction of the electric motor 1 in the embodiment described above and the like, but the structure of the coil winding 7 is not limited thereto. The structure of the coil winding 7 is not particularly limited as long as it has a structure in which a rotating magnetic field is generated as described above by application of a voltage (AC voltage) to the coil winding 7 (conductor wires 16 forming the coil winding 7) and the rotor 2 is rotated by the rotating magnetic field generated by the coil winding 7.

In addition, in the embodiment described above and the like, the projecting portion 31A projects from the coil winding 7 toward one side of the axial direction of the electric motor 1, and the projecting portion 31B projects from the coil winding 7 toward a side opposite to the side toward which the projecting portion 31A projects, in each of the flow tubes 15. However, the projecting directions of the projecting portions 31A and 31B are not limited to the structure of the embodiment described above and the like. In the electric motor 1, it suffices that the vessel 21A is disposed distantly from the coil winding 7 and the vessel 21B is disposed distantly from the coil winding 7 toward a side opposite to the side on which the vessel 21A is positioned. Further, it suffices that the projecting portion 31A projecting from the coil winding 7 toward the vessel 21A is inserted into the inner cavity 23 of the vessel 21A and the projecting portion 31B projecting from the coil winding 7 toward the vessel 21B is inserted into the inner cavity 23 of the vessel 21B.

In each of the modifications described above, the conductor wire bundle 17 formed by bundling a plurality of conductor wires 16 is formed in the coil winding 7, in the same manner as the first embodiment and the like. In addition, the flow tubes 15 are arranged on the outer surface (outer peripheral surface) of the conductor wire bundle 17. With this structure, each of the modifications properly secures the work efficiency in mutual assembling of the conductor wires 16 and the flow tubes 15, in the same manner as the first embodiment and the like.

In addition, the cooling structure cooling the coil winding 7 in the embodiment described above and the like is also applicable as a cooling structure cooling a coil winding in a generator. In a generator, a rotating magnetic field is generated by rotating a rotor. Thereafter, a voltage (electromotive force) is induced on a coil winding of a stator by the rotating magnetic field generated by rotation of the rotor. Also in a generator, the coil winding of the stator is cooled by the cooling structure like the embodiment described above and the like. Accordingly, the cooling structure of the embodiment described above and the like is applicable to a rotating electric machine, such as an electric motor and a generator.

According to at least one of these embodiments or examples, a conductor wire bundle formed by bundling a plurality of conductor wires is formed in the coil winding, and a flow tube is arranged on the outer surface of the conductor wire bundle. This structure provides a cooling structure in a rotating electric machine securing proper work efficiency in mutual assembling of the conductor wires forming the coil winding and the flow tubes through which cooling fluid flows.

Although some embodiments of the invention have been described, these embodiments are for purposes of illustration and are not intended to limit the scope of the invention. These novel embodiments may be implemented in various other forms and may be omitted, substituted, or changed in various ways without departing from the gist of the invention. These embodiments and modifications thereof are included in the scope and gist of the invention and are included in the invention disclosed in the claims and the equivalent scope thereof.

## Claims

1. A cooling structure in a rotating electric machine, comprising:
a coil winding including a plurality of conductor wires and in which a conductor wire bundle formed by bundling the conductor wires is formed, the coil winding rotating a rotor using a rotating magnetic field generated by application of a voltage to the conductor wires or inducing a voltage in the conductor wires by a rotating magnetic field generated by rotation of the rotor; and
a flow tube inside which cooling fluid flows, the flow tube arranged on an outer surface of the conductor wire bundle.

2. The cooling structure according to claim 1,
wherein
in the coil winding, a dimension along a first direction intersecting an extending direction of the conductor wire bundle is larger than a dimension along a second direction intersecting both the extending direction of the conductor wire bundle and the first direction,
a plurality of the flow tubes are provided, and
the flow tubes are arranged in line along the first direction on the outer surface of the conductor wire bundle.

3. The cooling structure according to claim 1 or 2, wherein
in the coil winding, a dimension along a first direction intersecting an extending direction of the conductor wire bundle is larger than a dimension along a second direction intersecting both the extending direction of the conductor wire bundle and the first direction,
the outer surface of the conductor wire bundle includes a first principal surface facing one side of the second direction and a second principal surface facing a side opposite to the first principal surface in the second direction,
a plurality of the flow tubes are provided, and
one or more of the flow tubes are arranged on each of the first principal surface and the second principal surface.

4. The cooling structure according to any one of claims 1 to 3, wherein
in the coil winding, the conductor wires are arranged in line along an arrangement direction intersecting the extending direction of the conductor wire bundle,
a plurality of the flow tubes are provided,
the flow tubes are arranged in line on the outer surface of the conductor wire bundle along the arrangement direction of the conductor wires, and
a pitch between the flow tubes mutually adjacent in the arrangement direction has a size of 80% or more to 120% or less as large as a size of a pitch between the conductor wires mutually adjacent in the arrangement direction.

5. The cooling structure according to any one of claims 1 to 4, wherein
a plurality of the flow tubes are provided, and
in the conductor wire bundle, a number density of the flow tubes arranged on the outer surface is higher in an end portion on a side on which the rotor is positioned than that in an end portion on a side opposite to the side on which the rotor is positioned.

6. The cooling structure according to any one of claims 1 to 5, further comprising:
a vessel having non-conductivity and disposed distantly from the coil winding, wherein
the flow tube includes a projecting portion projecting from the coil winding toward the vessel, and
the projecting portion of the flow tube is inserted into an inner cavity of the vessel.

## Amended claims

### Amended claims under Art. 19.1 PCT

1. (Amended) A cooling structure in a rotating electric machine, comprising:
a coil winding including a plurality of conductor wires and in which a conductor wire bundle formed by bundling the conductor wires is formed, the coil winding rotating a rotor using a rotating magnetic field generated by application of a voltage to the conductor wires or inducing a voltage in the conductor wires by a rotating magnetic field generated by rotation of the rotor; and
a flow tube inside which cooling fluid flows, the flow tube arranged on an outer surface of the conductor wire bundle, wherein
the coil winding includes a coil side portion in which the conductor wire bundle is extended along an axial direction of the rotating electric machine,
in the coil side portion, a dimension of the conductor wire bundle along a radial direction of the rotating electric machine is larger than a dimension of the conductor wire bundle along a circumferential direction of the rotating electric machine,
in the coil side portion, the outer surface of the conductor wire bundle includes a first principal surface facing one side of the circumferential direction of the rotating electric machine and a second principal surface facing a side opposite to the first principal surface in the circumferential direction of the electric rotating machine,
a plurality of the flow tubes are provided, and
one or more of the flow tubes are arranged on each of the first principal surface and the second principal surface in the coil side portion.

2. (Amended) The cooling structure according to claim 1, wherein
in the coil side portion, the flow tubes are arranged in line on the outer surface of the conductor wire bundle along the radial direction of the rotating electric machine.

3. (Canceled)

4. (Amended) The cooling structure according to claim 2, wherein
in the coil side portion of the coil winding, the conductor wires are arranged in line along the radial direction of the rotating electric machine serving as an arrangement direction, and
a pitch between the flow tubes mutually adjacent in the radial direction of the rotating electric machine has a size of 80% or more to 120% or less as large as a size of a pitch between the conductor wires mutually adjacent in the radial direction of the rotating electric machine.

5. (Amended) The cooling structure according to any one of claims 1, 2, and 4, wherein
in the coil side portion, a number density of the flow tubes arranged on the outer surface of the conductor wire bundle is higher in an end portion on a side on which the rotor is positioned in the radial direction of the rotating electric machine than that in an end portion on a side opposite to the side on which the rotor is positioned in the radial direction of the rotating electric machine.

6. (Amended) The cooling structure according to any one of claims 1, 2, 4, and 5, further comprising:
a vessel having non-conductivity and disposed distantly from the coil winding, wherein
each of the flow tubes includes a projecting portion projecting from the coil winding toward the vessel, and
the projecting portion of each of the flow tubes is inserted into an inner cavity of the vessel.
